# EUROPEAN PATENT APPLICATION

(11) **EP 4 837 824 A1**
(43) Date of publication of application: **11.11.2026**
(21) Application number: 26177058.0
(22) Date of filing: 06.05.2026
(51) Int. Cl.: B62D 49/06, B60B 15/28, B60C 23/00

(54) **VEHICLE COMPRISING AN IMPROVED BALLAST SYSTEM**

(30) Priority: 08.05.2025 IT 202500010377
(71) Applicant: CNH Industrial Italia S.p.A., 10156 Torino (IT)
(72) Inventor: DI STASI, Nicola, 10156 Turin (IT); NACLERIO, Luisa, 10156 Turin (IT)
(74) Representative: CNH Industrial IP Department

(57) **Abstract**

Provided is a ballast system (9) for an off-road vehicle (1) including a first and a second portions (10', 10"), wherein said first portion (10') is configured to be mechanically coupled to a hub (5) of said off-road vehicle (1), and wherein said second portion (10") is configured to be mechanically coupled to said first portion (10'), said second portion (10") comprising at least one ballast element (12) configured to define a pre-set weight.

## Description

### TECHNICAL FIELD

The present disclosure relates to a ballast system for a work vehicle.

Some example embodiments of the present disclosure may be applied in the field of work vehicles, for example, agricultural tractors, earth moving machines, off-road vehicles, and the like. Reference to this application will be made below by way of the various example embodiments described below.

### BACKGROUND

Work vehicles such as agricultural vehicles, e.g., tractors, are provided with ballasts, e.g., carried by wheels, to provide additional load to maintain stable the vehicle during work operation.

In particular, wheel's ballasts are assembled on the wheels before assembling the wheels on the tractor.

Such ballasts are directly assembled by bolting to the wheel's rim. In fact, the most used tractors comprise wheels whose rims are provided with holes designed to accommodate ballast fixing bolts.

In detail, such ballast assembled to wheel's rim, although robust and safe, requires the use of specific tools that increase complexity in assembling and disassembling the ballast, thereby increasing installation costs.

Furthermore, assembling or disassembling the ballasts on the tractor wheels increases the risk of damage to the tractor or ballasts themselves.

Moreover, such ballast system makes long and difficult the removal of ballast because it is needed to remove the wheel in order to assemble and disassemble the ballast, thereby limiting the operational flexibility of the tractor.

For example, if it is needed to quickly switch from an activity that requires ballasts to one that does not, the difficulty of removal can slow down the process compromising overall efficiency.

Furthermore, assembling or disassembling the ballast by removing the wheels from the tractor can cause various problems of instability of the tractor or even accidents.

Furthermore, the repeated assembly and disassembly of ballasts and wheels linked to the installation/removal of other tractor components can wear the latter (e.g., the ballasts and wheels) such as bolts, pins and other fastening systems. Indeed, said wear can lead to safety problems or require expensive repairs.

Therefore, there is a need (or it may be beneficial) to improve the ballast system for work vehicles by, for example, reducing complexity, their costs, and by improving their safety, thereby providing a viable alternative to conventional known systems.

The present disclosure is directed to overcome the aforementioned drawbacks, in an optimized and economical manner.

### SUMMARY

Some example embodiments relate to an improved ballast system for a work vehicle, such as an agricultural tractor.

An exemplary embodiment provides a ballast system (9) for an off-road vehicle (1) including a first and a second portions (10', 10''), wherein said first portion (10') is configured to be mechanically coupled to a hub (5) of said off-road vehicle (1), and wherein said second portion (10") is configured to be mechanically coupled to said first portion (10'), said second portion (10") comprising at least one ballast element (12) configured to define a pre-set weight.

### BRIEF DESCRIPTION OF DRAWINGS

Exemplary embodiments of the present disclosure are hereunder described with reference to the accompanying drawings, in which:
- Figure 1 is a perspective view of a work vehicle comprising a ballast system according to an exemplary embodiment, with parts removed for clarity;
- Figure 2 is a perspective view of a portion of the work vehicle of figure 1, with parts removed for clarity;
- Figure 3 is a plan view of an element of the ballast system with parts removed for clarity;
- Figure 4 is a diametrical sectional view, schematic and with parts removed for clarity, illustrating the element of figure 3;
- Figure 5 and figure 6 are respectively a sectioned view and an exploded perspective view of a first embodiment of a ballast system, with parts removed for clarity;
- Figure 7 and figure 8 are respectively a sectioned view and an exploded perspective view of a second embodiment of a ballast system, with parts removed for clarity;
- Figure 9 and figure 10 are respectively a sectioned view and an exploded perspective view of a third embodiment of a ballast system, with parts removed for clarity;
- Figure 11 is a perspective view of the embodiments of figures 5-10, with parts removed for clarity; and
- Figure 12 is a sectioned view of a ballast system according to an exemplary embodiment.

### DETAILED DESCRIPTION

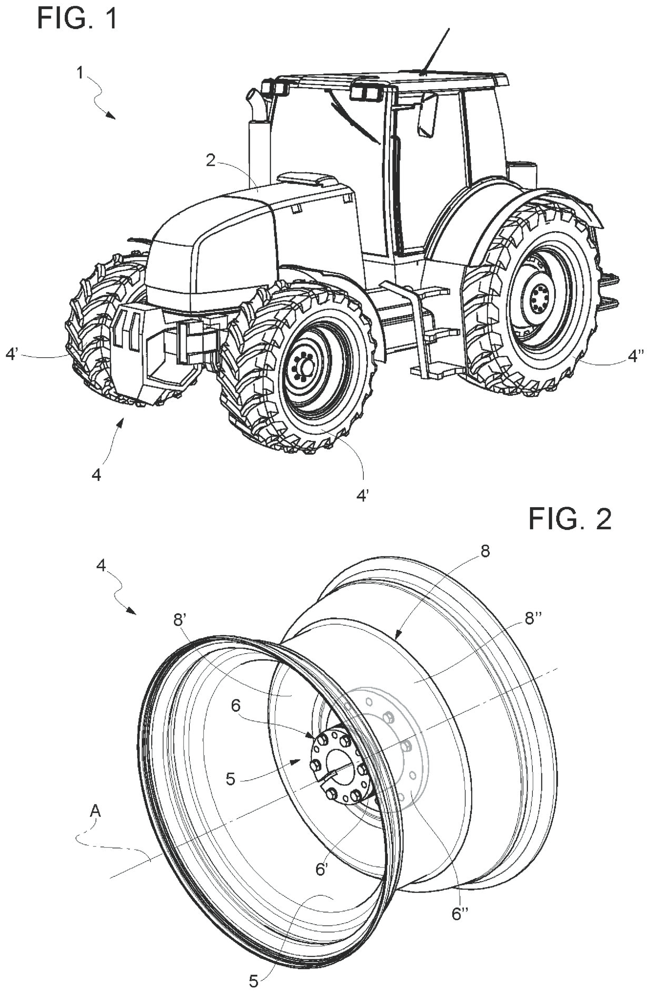

In Figure 1, work vehicle 1 (also referred to herein as Tractor 1) is an agricultural tractor, but example embodiments are not limited thereto. For example, work vehicle 1 may be any other work and/or agricultural vehicle.

Tractor 1 comprises a body 2 carried movable on ground via ground engaging means 3, including the wheels 4. In particular, the wheels 4 include a pair of front wheels 4' and a pair of rear wheels 4".

In detail, the wheels 4 are carried by vehicle body 2, e.g., by a related axle of a suspension system.

Tractor 1 comprises a hub 5 that is carried in rotation by a transmitting motion system (not illustrated) for transmitting its motion to the ground engaging means 3, e.g., to wheels 4.

In particular, hub 5 comprises a tubular element 6 comprising an axial wall 6' and a radial wall 6".

In detail, axial wall 6' is axisymmetric with respect to axis A and therefore defining a substantially cylindrical shape.

In further detail, radial wall 6'' extends radially starting from the axial wall 6', in particular, at an axial extremity thereof.

Advantageously, radial wall 6'' comprises holes 7 configured to house connecting means 7' (or a connector 7'), such as threaded elements, configured to keep axially packed the hub 5 and the wheel 4 so that they are integral with the transmitting motion system (not shown) of the tractor 1.

In particular, each wheel of the wheels 4 comprises a rim 8 of known typology. Accordingly, each rim of the rims 8 comprises a disk portion 8' configured to allow coupling to hub 5 and an axial portion 8'' configured to allow support for a tire, not shown.

The rim 8 therefore delimits a portion of space S that is axially delimited from one side by the disk portion 8' and opened to the environment to the other side and radially delimited by the axial portion 8'' with respect to axis A.

Tractor 1 comprises a ballast system 9 configured to be selectively fixed connected to hub 5 to provide an additional load thereto.

In detail, ballast system 9 is configured to be fixed to the radial wall 6'' of the hub 5 as disclosed below.

The ballast system 9 comprises a first portion 10' and a second portion 10".

In particular, the first portion 10' comprises one or more support elements 11 and is configured to be mechanically coupled to the hub 5; the second portion 10" comprises one or more ballast elements 12 and is configured to be mechanically coupled to the first portion 10'.

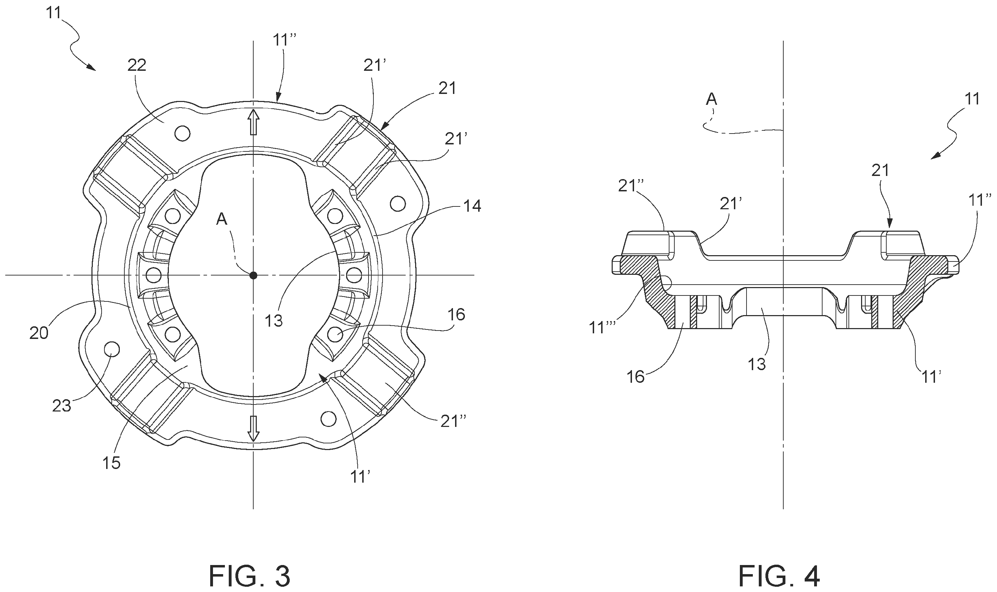

As illustrated in figures 3 and 4, the support element 11 comprises a first and a second coupling portions 11', 11" wherein the first coupling portion 11' is configured to be fixed to hub 5 and the second coupling portion 11" is configured to be connected to the second portion 10".

Preferably, the first and the second coupling portions 11', 11'' have a substantial circular shape, e.g., they are disk shaped.

In detail, the first coupling portion 11' has a radial extension about axis A that is smaller than the second coupling portion 11", e.g., the diameter of the first coupling portion 11' is smaller than the diameter of the second coupling portion 11".

In particular, the support element 11 comprises a connecting portion 11‴ connecting together the first and second coupling portion 11', 11".

In detail, the connecting portion 11‴ has variable shape configured to connect together at least a minimum diameter portion of the second coupling portion 11" to a maximum diameter portion of the first coupling portion 11'.

The first coupling portion 11' is preferably annular, e.g., defines a first opening 13 configured to house, at least partially, the hub 5, e.g., the axial portion thereof.

Similarly, the second coupling portion 11" is annular and defines a second opening 14 that has a diameter that is greater than the diameter of the first opening 13.

Preferably, first and second openings 13, 14 are coaxial to axis A, such as preferably the first and second coupling portions 11', 11'' are coaxial between themselves.

With reference to the above, support element 11 defines a first axial surface 15 due to the difference of diameter of the first and second openings 13, 14.

In use, the first axial surface 15 is placed on the opposite side with respect to the hub 5 of the first coupling portion 11'.

In particular, the first and second coupling portions 11', 11" and the connecting portion 11‴ are made of a single piece.

In the disclosed embodiment, the first coupling portion 11' defines a plurality of first openings 16, in particular, realized as through holes, configured to allow housing of connecting means 7' (or the connector 7'), such as threaded elements, to allow connection to the hub 5, as stated above.

The first openings 16 are circumferentially spaced one with respect to the other and, preferably, are each equal to the other.

In the disclosed exemplary embodiment, the first openings 16 are grouped in two separate groups placed diametrically opposite one to the other.

In detail, each group comprises three first openings 16 wherein each opening of each of the above-mentioned group is preferably equally spaced to the other.

In use, the first openings 16 are coaxial to the respective holes 7 realized in the radial wall 6'' and not further described for sake of brevity.

The second coupling portion 11" of the support element 11 defines a second axial surface 20 substantially parallel with respect to the first axial surface 15 of the first coupling portion 11', e.g., offset according to the position of the second coupling portion 11" with respect to the first coupling portion 11' along axis A.

In particular, the second coupling portion 11" comprises a plurality of protuberances 21 which extend axially from the second coupling portion 11", in particular, starting from the second axial surface 20.

In other words, protuberances 21 extend axially on the opposite side with respect to the first coupling portion 11' and are preferably spaced one to the other circumferentially about axis A and in further detail they are equally spaced.

Preferably, they are in number of at least three and disposed in a pair opposite manner.

Preferably, each protuberance 21 extends from a flanged portion 22 of the second coupling portion 11" that extends radially with respect to axis A with respect to the remaining portion.

In particular, ballast system 9 comprises centering means 24 (or a centering 24) configured to center about axis A the second portion 10" with respect to the first portion 10'.

In detail, centering means 24 (or the centering 24) may comprise at least one of the protuberances 21 described above.

Accordingly, flanged portions 22 are preferably spaced one to the other circumferentially about axis A and in further detail they are equally spaced, therefore in correspondence of the protuberances 21. As illustrated in figure 4, each protuberance 21 comprises two side walls 21' and a top wall 21" configured to define together with the flanged portion 22 a base of a substantially quadrangular shape, such as a trapezoid.

In particular, the side walls 21' extend with respect to the second axial surface 20 along axis A of each protuberance 21, are positioned facing each other and spaced circumferentially.

In detail, the side walls 21' can be inclined with respect to axis A by a respective angle.

The top wall 21" is arranged between the two side walls 21' and therefore extends radially and circumferentially about axis A.

In particular, the second coupling portion 11" comprises second openings 23 configured to couple the support element 11 to the second portion 10".

In particular, such second openings 23 are through holes and preferably are realized, as shown, in the flanged portion 22.

In detail, second openings 23 are circumferentially spaced one with respect to the other and, preferably, are each equal to the other.

Preferably, they are in number of at least four and disposed in a pair opposite manner, and in further detail adjacent to the protuberances 21.

Returning to ballast element 12, it is configured to be mechanically coupled to the first portion 10', in particular, to the support element 11 as stated above.

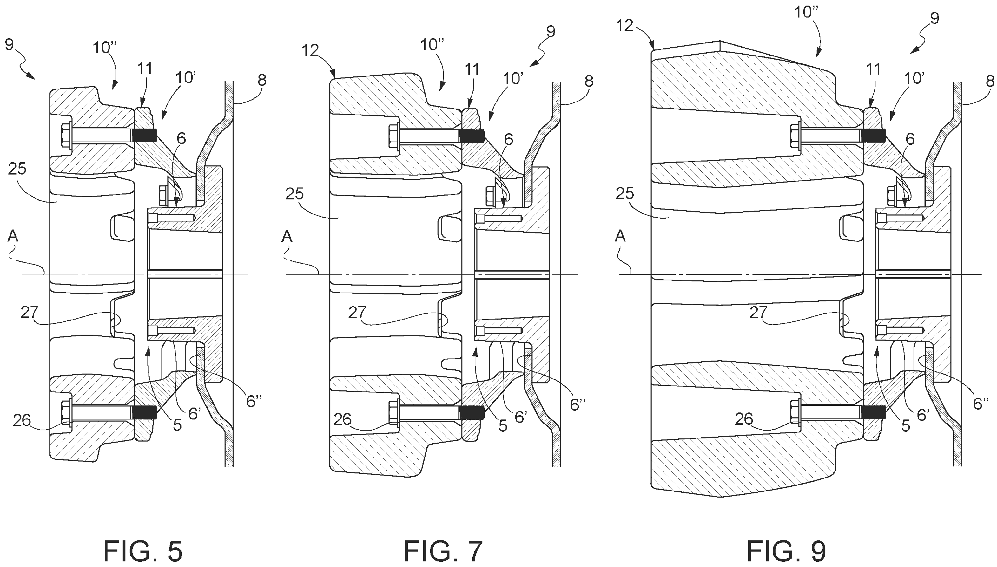

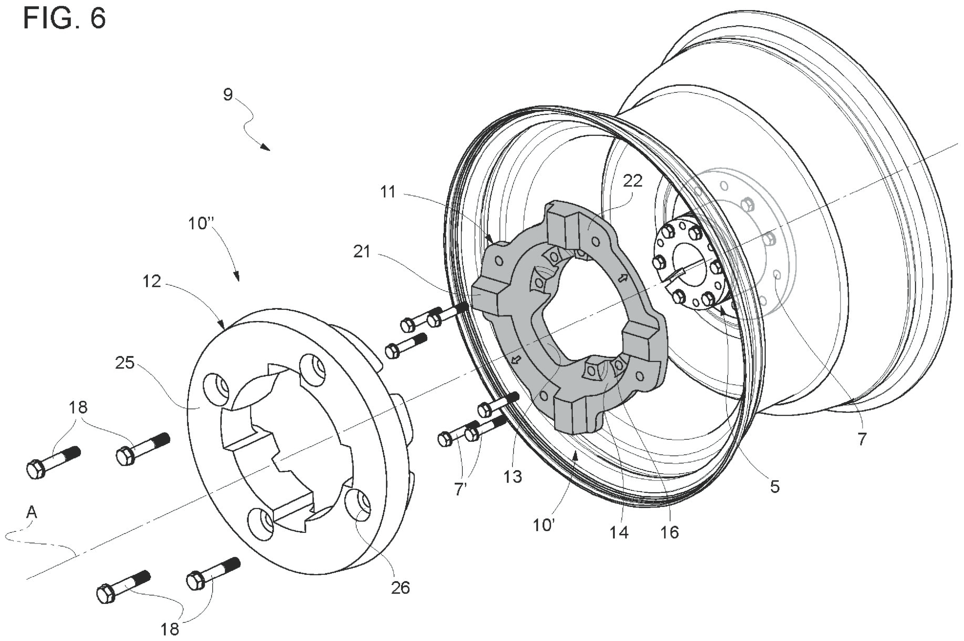

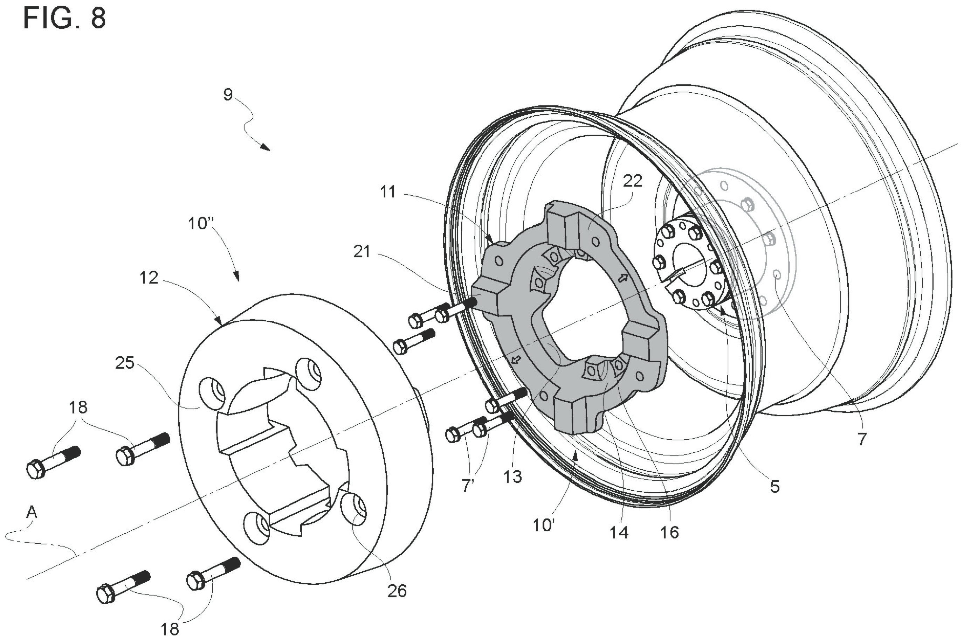

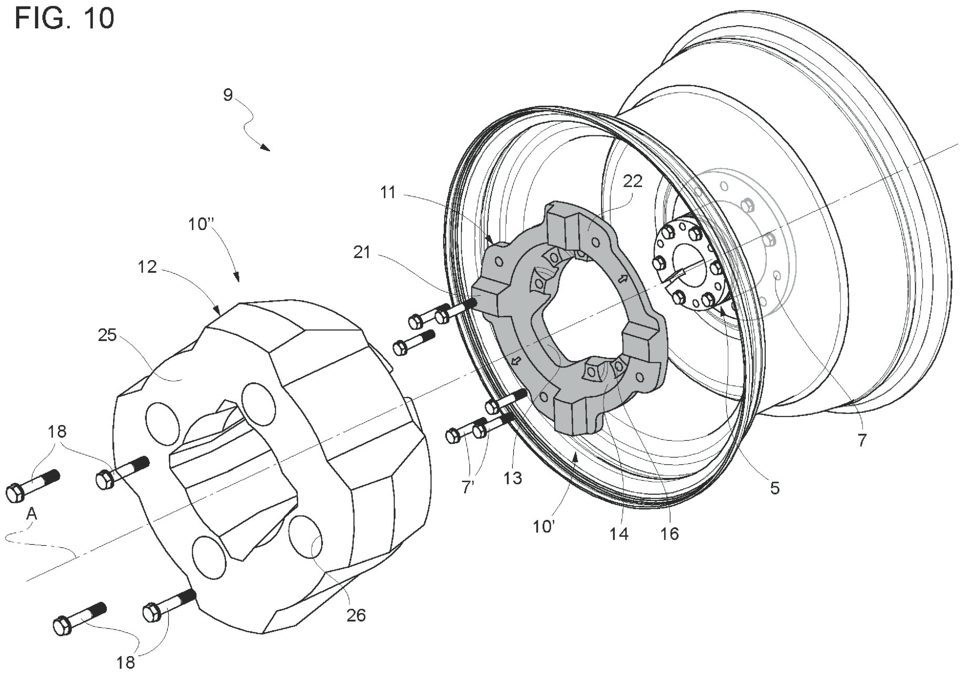

In detail, the ballast element 12 comprises a body 25 that extends along axis A and has a variable shape as illustrated in figures 5-11.

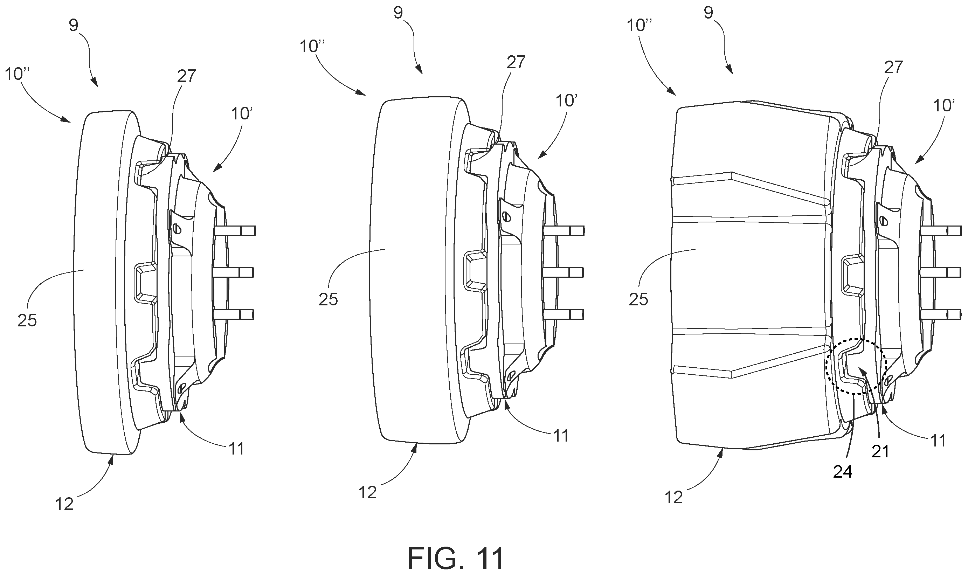

In detail, the ballast element 12 shape and material are designed to provide a specific additional load. In figure 11 three different possible designs are shown corresponding to different weights associated with the body 25. Further details about the geometry of the body are not provided, being not pertinent to the present disclosure.

In particular, body 25 of the ballast element 12 further comprises a plurality of third openings 26, in particular, through holes, configured to allow housing of further connecting means 18 (or connectors 18), such as threaded elements, to allow connection to the support element 11, as stated above.

In use, the third openings 26 are coaxial to the second openings 23 realized in the support element 11 and not further described for sake of brevity.

In particular, the body 25 comprises a plurality of seats 27 of which at least some are configured to house, in use, a respective protuberance 21 of the support element 11.

Accordingly, the plurality of seats 27 extend axially within the body 25, in particular, starting from an external surface thereof.

Preferably, they are equally spaced circumferentially along axis A. In further detail, they can be in the same number or in a greater one with respect to the protuberances 21.

At least in the case in which they are the same number, one of the plurality of seats 27 have a dimension that is greater, radially and/or circumferentially with respect to axis A, with respect to the protuberance 21, thereby defining a clearance that allows the passage of a oblong element such as wire/cable/pipe/hose 30 as described below in detail.

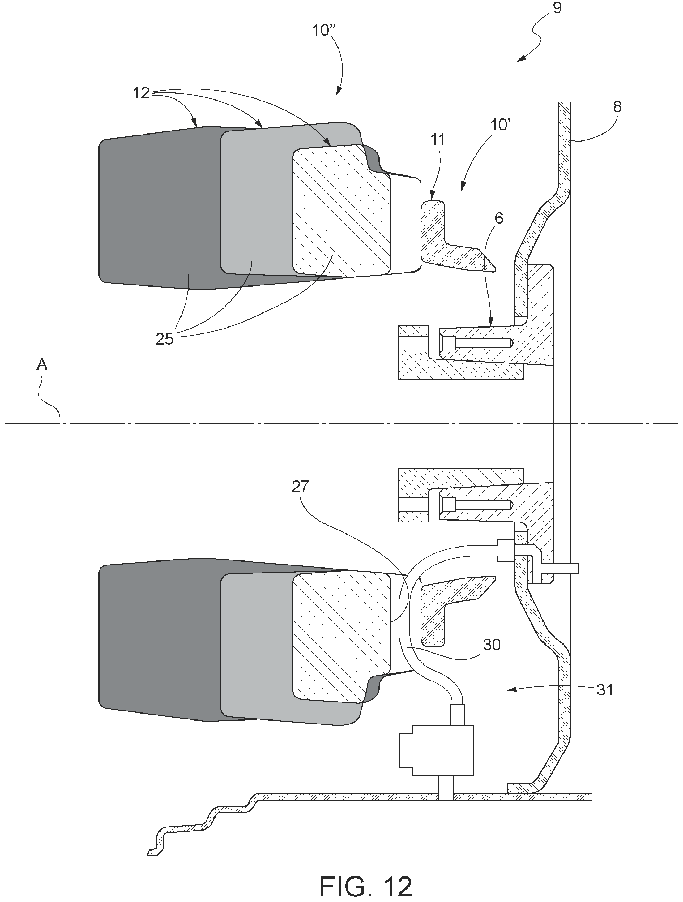

As shown in figure 12, vehicle 1 may comprise assistance driving systems 31 such as CTIS, e.g., central tire inflation system, of known typology and not further described.

Such assistance driving systems 31 are connected to respective control unit (not shown) by the oblong element 30 as mentioned above.

The difference of dimension between the seat 27/protuberance 21 or the additional seat allow the passage of such wire/cables 30.

The operation of the ballast system 12 described above according to the present disclosure is as follows.

In order to fix the ballast system 12 on the wheel 4, which is already fixed on the hub 5, the operator prepares the support element 11, the ballast element 12 and the connecting means 18 (or the connector 18).

In particular, the operator fixes the support element 11 to the radial wall 6" of the hub 5 by tightening the connecting means 7' (or the connector 7') inside the holes 7 of the radial wall 6'' and the first through holes 16 of the support element 11.

Once these have been fixed, the operator can place the ballast element 12 on the support element 11 by engaging the centering means 24 (or the centering 24), such as the protuberances 21.

As shown in the embodiments of figures 5-11, the protuberances 21 of the support element 11 are engaged in the hollow seats 27 of the ballast element 12.

In this way, the first through holes 16 of the support element 11 are coaxial with the third openings 26 of the ballast element 12 so as to be able to proceed with tightening the connecting means 18 (or connector 18) inside the aforementioned first and third openings 16, 26.

In case there is the need to allow the passage of the oblong element 30 out of the rim 8, the user may place such oblong element 30 within the free seats of the plurality of seats 27 or within the larger seat of the plurality of seats 27 thereby allowing its safe passage before fixing the body 25 to the support element 11.

In view of the foregoing, the advantages of a ballast system according to the present disclosure are evident.

Thanks to ballast system 9 it is possible to secure a ballast 12 to a wheel 4 in a tractor 1 in a quick, safe and easy manner.

Advantageously, ballast system 9 allows to install or replace the ballast elements 12 without the need to intervene significantly on the dismount of the tractor components, in particular, the wheel 4.

Indeed, support element 11 can always be secured to the wheel 4 and only the body 25 can be exchanged when necessary.

Moreover, the centering between the support element 11 and the ballast element 12 is achieved by centering means 24 (or the centering 24) provided between these latter (e.g., the ballast element 12).

Furthermore, the engagement between the centering means 24 (or the centering 24) and the ballast element 12 facilitates the definition of the correct orientation angle between the support element 11 and the ballast element 12.

In addition, the ballast system 9 has dimensions consistent with the structure of the tractor 1 without having an impact from a construction and design point of view.

In particular, due to the versatility of the proposed ballast system 9 it is possible to use this latter (e.g., the ballast system 9) as a kit in different vehicle typology.

Finally, it is clear that modifications and variations can be made to the ballast system 9 according to the present disclosure which does not extend beyond the scope of protection defined by the claims.

For example, it is clear that the shape of the support element 11 or that of the ballast elements 12 can be different, as illustrated in figures 5 to 11.

As already mentioned, hub 5 and radial wall 6'' could be made in two separate elements and not in one piece as above described.

Furthermore, the centering means 24 (or the centering 24) and/or the connecting means (7', 18) (or connectors 7', 18) described could be replaced by one or more equivalent elements or equivalent means.

In particular, it is clear that described holes can vary their number or their shape or disposition within the scope claimed below.

In detail, the protuberances 21 described as part of the support element 11 can be provided on the body 25 and the openings 16 on the support element 11, e.g., a dual version with respect to the described one or a mix of these latter.

Clearly, it is possible that further additional mechanical elements such as seals, screws or other elements that are necessary and obvious from a construction point of view could be present and not further described for brevity.

## Claims

1. A ballast system (9) for an off-road vehicle (1), said ballast system (9) comprising:
a first portion (10') configured to be mechanically coupled to a hub (5) of said off-road vehicle (1); and
a second portion (10") comprising at least one ballast element (12) configured to define a pre-set weight, wherein the second portion (10") is configured to be mechanically coupled to said first portion (10').

2. The ballast system according to claim 1, wherein:
said first portion (10') comprises at least one support element (11),
said support element (11) comprises a first coupling portion (11') and a second coupling portions (11"),
said first coupling portion (11') is configured to be fixed to said hub (5), and
said second coupling portion (11") is configured to be connected to said second portion (10").

3. The ballast system according to claim 2, wherein said first and second coupling portions (11', 11") have a circular shape.

4. The ballast system according to claims 2 or 3, wherein said first and second coupling portions (11', 11") have an annular shape so as to be housed about said hub (5).

5. The ballast system according to any of claims 2 to 4, wherein:
said support element (11) comprises a connecting portion (11‴) configured to connect said first and second coupling portions (11', 11"), and
said first and second coupling portions (11', 11") and said connecting portion (11‴) are realized as one piece.

6. The ballast system according to any of claim 2 to 5, wherein each coupling portion between said first and second coupling portions (11', 11") defines a first opening (16) and a second opening (23) configured to allow passage of connecting means (7', 18) to allow connection to respective elements.

7. The ballast system according to any of the preceding claims, comprising centering means (24) configured to center said second portion (10") with respect to said first portion (10').

8. The ballast system according to claim 7, wherein:
said centering means (24) comprise at least one protuberance (21) carried by one between said support element (11) and said ballast element (12), and
said centering means (24) are configured to be housed within a respective seat of a plurality of seats (27) realized in the other between said support element (11) and said ballast element (12).

9. The ballast system according to claim 8, wherein:
said protuberance (21) is carried by said support element (11), and
said respective seat of the plurality of seats (27) is realized in said ballast element (12).

10. The ballast system according to claim 8 or 9, wherein at least one seat among the plurality of seats (27) is shaped so as to house a respective protuberance (21) with a gap, said gap being designed to allow the passage of an oblong element (30) of said vehicle (1).

11. The ballast system according to any of claims 8 to 10, wherein said centering means (24) comprise more seats (27) with respect to the number of protuberances (21), wherein one seat among said seats (27) is unoccupied by a protuberance (21) being configured to house an oblong element (30) of said vehicle (1).

12. A wheel (3) assembly for an off-road vehicle (1) comprising a hub (5) and a rim (8) carried by said hub (5) and a ballast system (9) according to any of the preceding claims carried by said hub (5) within said rim (8).

13. The wheel assembly according to claim 12 when depending on claims 10 and/or 11, further comprising an assistance driving system (31) provided with an oblong element (30), said oblong element (30) passing through one among said seats (27).

14. A vehicle (1) comprising a hub (5) and a ballast system (9) according to any of the preceding claims coupled to said hub (5).

15. A vehicle (1) comprising a wheel assembly according to claims 12 or 13.
